# EUROPÄISCHE PATENTSCHRIFT

(11) **EP 0 543 108 B1**
(45) Veröffentlichungstag und Bekanntmachung des Hinweises auf die Patenterteilung: **14.06.1995**
(21) Anmeldenummer: 92116056.0
(22) Anmeldetag: 19.09.1992
(51) Int. Cl.: B01D 45/06, B01D 45/08

(54) **Abscheider für Flüssigkeiten aus einem Gasstrom, insbesondere für Ölnebel**
Separator for liquids contained in a gas, in particular for oil mist
Séparateur pour liquides contenus dans un gaz, particulièrement pour un brouillard d'huile

(30) Priorität: 26.09.1991 DE 4131988
(43) Veröffentlichungstag der Anmeldung: 26.05.1993
(73) Patentinhaber: RENTSCHLER-REVEN-LÜFTUNGSSYSTEME GmbH, D-74372 Sersheim (DE)
(72) Erfinder:
(74) Vertreter: Hoeger, Stellrecht & Partner

(56) Entgegenhaltungen:
- EP-A- 0 148 289
- DE-B- 1 122 498
- DE-U- 9 013 468
- FR-A- 2 120 471

## Beschreibung

Die Erfindung betrifft einen quer angeströmten, plattenförmigen Abscheider für Flüssigkeiten aus einem Gasstrom, insbesondere für Ölnebel, mit einer Mehrzahl von jeweils zwei gekrümmten, einander mit der konkaven Seite seitlich versetzt gegenüberliegenden Umlenkflächen, an denen ein zu reinigender Luftstrom nacheinander entlangströmt, wobei die Umlenkflächen eine Wirbelkammer mit einem Einlaßspalt und einem Auslaßspalt zwischen sich einschließen.

Derartige Abscheider sind beispielsweise aus der französischen Offenlegungsschrift FR-A-2 388 532 bekannt. Dabei liegen eine Vielzahl im Querschnitt kreisbogenförmiger Profile, die sich beispielsweise über einen Dreiviertelkreis erstrecken, mit der offenen Seite gegenüber und sind so seitlich versetzt, daß die randnahen Teile der einander gegenüberliegenden Profile zwischen sich eine schmale Wirbelkammer ausbilden. Ein in ein offenes Profil eintretender Luftstrom wird in diesem umgelenkt und in eine solche Wirbelkammer eingeleitet. Dabei wird durch die Umlenkung einerseits und durch die Geschwindigkeitsänderungen auf Grund von Querschnittsveränderungen andererseits eine Abscheidung der im Luftstrom mitgerissenen Flüssigkeitspartikel erreicht, so daß der Luftstrom anschließend parallel zur ursprünglichen Eintrittsrichtung wieder aus dem Abscheider gereinigt austritt. Ein Abscheider dieser Bauart hat den Vorteil, daß er eine geringe Bauhöhe hat, da die Bauhöhe sich durch die beiden einander gegenüberliegenden rinnenförmigen Profile ergibt, allerdings ist der Abscheidungsgrad nicht für alle Ansprüche ausreichend.

Im deutschen Gebrauchsmuster DE-U-90 05 858 ist ein Abscheider beschrieben, der eine besonders gute Abscheidung dadurch erzielt, daß die Luftströme sich aufgrund einer sehr speziellen Führung durchkreuzen. Obwohl dadurch eine erheblich verbesserte Abscheidung gegenüber herkömmlichen Abscheidern zu erzielen ist, ergibt sich eine relativ große Baugröße, außerdem treten Strömungsverluste dadurch auf, daß sich die Strömungen gegenseitig durchkreuzen.

Es ist Aufgabe der Erfindung, einen gattungsgemäßen Abscheider so weiterzubilden, daß eine verbesserte Abscheidung erreicht werden kann.

Diese Aufgabe wird bei einem Abscheider der eingangs beschriebenen Art erfindungsgemäß dadurch gelöst, daß die einströmseitig Umlenkfläche in Strömungsrichtung eine zunehmende Krümmung und die ausströmseitige Umlenkfläche in Strömungsrichtung eine abnehmende Krümmung aufweist und daß die die Wirbelkammer bildenden einströmseitigen und ausströmseitigen Umlenkflächen in der durch ihre jeweiligen Kanten aufgespannten Ebene um maximal die halbe Breite einer Umlenkfläche gegeneinander versetzt sind.

Beim Einströmen in die von den beiden Umlenkflächen gebildeten Wirbelkammern wird durch die zunehmende Krümmung der Umlenkflächen überraschenderweise eine wesentlich verbesserte Abscheidung erzielt, da die zunehmende Krümmung der Umlenkflächen zu einer stärkeren Veränderung der Flugrichtung der Partikel führt, als dies bei einer gleichmäßigen Krümmung der Umlenkfläche der Fall wäre. Gleichzeitig wird die Geschwindigkeit der Teilchen durch die sich erhöhende Krümmung erhöht, auch dies fördert die Abscheidung. Die von den beiden Umlenkflächen auf diese Weise gebildete Wirbelkammer hat eine zyklonartige Abscheidewirkung, so daß auf engstem Raum eine besonders wirksame Abscheidung erzielt wird, ohne daß hohe Strömungsverluste auftreten.

Es ist dabei weiterhin vorteilhaft, daß die eine Wirbelkammer bildenden, einströmseitigen und ausströmseitigen Umlenkflächen in der durch ihre jeweiligen Kanten aufgespannten Ebene um maximal die halbe Breite einer Umlenkfläche gegeneinander versetzt sind. Damit liegen diese Umlenkflächen mindestens mit der Hälfte ihrer Breite einander gegenüber, so daß eine sich über mindestens die Hälfte der Umlenkflächenbreite erstreckende Wirbelkammer gebildet wird. Im Gegensatz zu herkömmlichen Anordnungen, bei denen sich die einander gegenüberliegenden Profile nur in den Randbereichen überdecken und bei denen diese Profile fast um die gesamte Profilbreite seitlich gegeneinander versetzt sind, wird durch die erhöhte Überlappung einander gegenüberliegender Profile in Richtung der durch die Kanten aufgespannten Ebene einerseits eine sehr große Wirbelkammer geschaffen, die andererseits durch die beiden Umlenkflächen sehr wirksam begrenzt wird. Dies fördert die Abscheidung.

Vorteilhaft ist dabei die Ausgestaltung, wenn die Krümmung des stromabwärts gelegenen Teils der einströmseitigen Umlenkfläche kreisbogenförmig ist und/oder wenn die Krümmung des stromaufwärts gelegenen Teils der ausströmseitigen Umlenkfläche kreisbogenförmig ist. Dadurch wird die Wirbelkammer aufgeweitet, so daß im Inneren der Wirbelkammer durch einen erhöhten Querschnitt eine besonders große Geschwindigkeitsänderung des Gasstromes eintritt.

Insbesondere ist es günstig, wenn die von den Umlenkflächen eingeschlossene Wirbelkammer im wesentlichen einen kreisförmigen Querschnitt aufweist, da dadurch die Ausbildung eines Wirbels in der Wirbelkammer begünstigt wird.

Dabei kann vorgesehen sein, daß der Durchmesser der Wirbelkammer vier- bis sechsmal so groß ist wie die Breite des Einlaßspaltes zwischen der einströmseitigen Umlenkfläche und der Kante der ausströmseitigen Umlenkfläche. Dies führt zu einer erheblichen Querschnittsvergrößerung nach Eintritt der Strömung in die Wirbelkammer und damit zu einer starken Herabsetzung der Strömungsgeschwindigkeit, wodurch wiederum eine besonders effektive Abscheidung eintritt.

Bei einer bevorzugten Ausführungsform ist vorgesehen, daß die einströmseitige Umlenkfläche mit ihrer einströmseitigen Kante eine Einströmöffnung begrenzt, durch die der zu reinigende Luftstrom von der Außenseite der Umlenkfläche her im wesentlichen senkrecht zum anliegenden Teil der einströmseitigen Umlenkfläche eintritt. Der zu reinigende Luftstrom wird also nach dem Passieren der Einströmöffnung um mindestens 90° abgelenkt und wird erst nach dieser Ablenkung von der einströmseitigen Umlenkfläche in die Wirbelkammer geführt. Diese Ablenkung des Luftstromes vor Erreichen der Umlenkfläche um mindestens 90° führt zu einer sehr effektiven Vorabscheidung von Flüssigkeitsteilchen, so daß in die Wirbelkammer selber ein geringerer Flüssigkeitsanteil eintritt.

Es kann vorgesehen sein, daß spiegelbildlich ausgebildete Paare von einströmseitigen und ausströmseitigen Umlenkflächen nebeneinander und spiegelsymmetrisch zur Mittelachse des durch die Einströmöffnung eintretenden Luftstromes angeordnet sind. Der durch die Einströmöffnung eintretende Luftstrom wird daher nach dem Passieren der Einströmöffnung nach zwei entgegengesetzten Richtungen aufgetrennt und gelangt in Form von zwei Teilströmen nach einer mindestens 90°-Umlenkung an den spiegelbildlichen einströmseitigen Umlenkflächen in spiegelbildliche Wirbelkammern.

Dabei ist es günstig, wenn die Breite der Einströmöffnung im wesentlichen doppelt so groß ist wie die Breite des Einlaßspaltes in die Wirbelkammer. Dies führt dazu, daß die Einströmgeschwindigkeit im Bereich der Einströmöffnung und im Bereich des Einlaßspaltes im wesentlichen gleich ist.

Die Umlenkung des durch die Einströmöffnung eintretenden Luftstromes wird dadurch begünstigt, daß zwischen den einströmseitigen Kanten der ausströmseitigen Umlenkflächen quer zur Einströmrichtung des durch die Einströmöffnung eintretenden Luftstromes eine konkave Prallfläche angeordnet ist, die vorzugsweise breiter ist als die Einströmöffnung. Diese Prallfläche begrenzt zusammen mit den einströmseitigen Teilen der einströmseitigen Umlenkflächen einen den Wirbelkammern vorgeschalteten Wirbelraum, der als Vorabscheider wirkt.

Es kann vorgesehen sein, daß zwischen benachbarten Einströmöffnungen in Einströmrichtung konvergierende Prallflächen angeordnet sind. Ein in diesem Bereich auftreffender Luft- oder Gasstrom erfährt durch den Aufprall ebenfalls eine Absonderung von Flüssigkeitsteilchen, jedoch kann der Gasstrom nicht durch den Abscheider insgesamt hindurchtreten, sondern wird in den Raum vor dem Abscheider zurückgeworfen. Auf diese Weise erfährt ein erheblicher Teil der zu reinigenden Gasmenge eine Vorreinigung, bevor der Gasstrom überhaupt durch die Einströmöffnung hindurchtritt. Der auf den Abscheider auftreffende Gasstrom "sieht" beim Auftreffen in jedem Fall konvergierende Prallflächen, nämlich entweder in Form der zwischen den Einströmöffnungen angeordneten konvergierenden Prallflächen oder in Form der sich quer über die Einströmöffnung erstreckenden, konkaven Prallflächen.

Die Prallflächen zwischen den Einströmöffnungen können unter Ausbildung einer Abrißkante in eine erweiterte Prallkammer einmünden. Durch eine solche Abrißkante mit anschließender Erweiterung ergibt sich auch in diesem Bereich eine deutliche Erhöhung der Abscheidung von Flüssigkeitsteilchen.

Bei einem weiteren bevorzugten Ausführungsbeispiel kann vorgesehen sein, daß die ausströmseitige Kante der ausströmseitigen Umlenkfläche eine Ausströmöffnung begrenzt, durch die der gereinigte Gasstrom im wesentlichen senkrecht zum anliegenden Teil der ausströmseitigen Umlenkfläche nach außen austritt. Auch in diesem Bereich erfolgt also eine Richtungsumkehr um mindestens 90°, die zu einer abschließenden Feinabscheidung führt.

Günstig ist es, wenn der Ausströmöffnung ein Verwirbelungsraum vorgelagert ist, der von den ausströmseitigen Enden von zwei spiegelbildlich zueinander angeordneten, ausströmseitigen Umlenkflächen, die die Ausströmöffnung zwischen sich ausbilden, und von einer zwischen den ausströmseitigen Kanten der beiden zugehörigen einströmseitigen Umlenkflächen angeordneten Abschlußwand gebildet wird. In diesen Verwirbelungsraum tritt bei einer solchen Ausgestaltung von entgegengesetzten Seiten je ein aus einer Wirbelkammer austretender, weitgehend gereinigter Gasstrom ein. Diese Gasströme stoßen frontal aufeinander und werden beide in Richtung auf die Ausströmöffnung senkrecht nach außen umgelenkt. Dies führt insgesamt zu einer sehr effektiven End- oder Feinabscheidung, die einmal auf der Umlenkung und zum anderen auf dem frontalen Aufeinanderstoßen von zwei entgegengesetzt gerichteten Gasströmen beruht.

Dabei ist es vorteilhaft, wenn die Abschlußwand zum Verwirbelungsraum hin konkav ausgebildet ist, so daß der Verwirbelungsraum insgesamt einen etwa kreisförmigen Querschnitt erhält.

Vorzugsweise ist die Abschlußwand breiter als die Ausströmöffnung.

Bei einer bevorzugten Ausführungsform ist vorgesehen, daß die ausströmseitige Umlenkfläche und die einströmseitige Umlenkfläche am Auslaß der Wirbelkammer einen Auslaßspalt bilden und daß jeder Auslaßspalt so in den Verwirbelungsraum einmündet, daß der aus ihm austretende Luftstrom frontal auf einen Luftstrom auftrifft, der durch einen gegenüberliegenden Auslaßspalt einer benachbarten Wirbelkammer in den Verwirbelungsraum eintritt. Durch diese Maßnahme des Aufeinandertreffens der beiden Luftströme mit anschließender Richtungsumkehr wird eine Feinabscheidung der mitgerissenen Teilchen erzielt, die trotz der sehr effektiven Abscheidung in der Wirbelkammer noch in den Luftströmen enthalten sind.

Besonders vorteilhaft ist es in allen Fällen, wenn an den einströmseitigen und ausströmseitigen Enden der Umlenkflächen wulstförmige Abrißkanten angeordnet sind. Diese haben beispielsweise eine im wesentlichen kreisförmige Querschnittsform, wobei der Durchmesser dieser Abrißkanten größer ist als die Dicke der eine Umlenkfläche bildenden Wand.

Günstig ist es dabei, wenn die wulstförmigen Abrißkanten an der einströmseitigen Kante der ausströmseitigen Umlenkfläche sowie an der ausströmseitigen Kante der einströmseitigen Umlenkfläche mittig angeordnet sind, so daß sowohl auf der Umlenkflächenseite als auch auf der Außenseite derselben, also im Bereich der Prallfläche beziehungsweise der Abschlußwand, eine Abrißkante ausgebildet wird.

Dagegen ist es günstig, wenn die der Einströmöffnung und der Ausströmöffnung benachbarten Abrißkanten nur an der Innenseite der Umlenkflächen ausgebildet sind. Dies läßt sich dadurch erreichen, daß die Kante mit kreisförmigem Querschnitt an der Außenseite jeweils tangential in die Umlenkflächenwand übergeht.

Ein besonders einfaches Ausführungsbeispiel eines Abscheiders ergibt sich, wenn zwei benachbarte, spiegelbildlich ausgebildete einströmseitige Umlenkflächen durch einen Steg an ihrer Außenseite miteinander verbunden sind. Man erhält somit ein Bauteil, welches auf gegenüberliegenden Seiten spiegelbildlich ausgebildete Umlenkflächen trägt.

In gleicher Weise kann vorgesehen sein, daß zwei benachbarte, spiegelbildlich ausgebildete ausströmseitige Umlenkflächen durch einen Steg an ihrer Außenseite miteinander verbunden sind.

Besonders vorteilhaft ist eine Ausgestaltung des Abscheider, bei der vorgesehen ist, daß die vorstehend beschriebenen Baueinheiten aus je zwei Umlenkflächen gleich ausgebildet sind und um 180° verdreht und seitlich und in Anströmrichtung versetzt zueinander angeordnet sind. Es gelingt auf diese Weise, aus einem gleich aufgebauten Bauteil durch unterschiedliche Anordnung wahlweise einströmseitige oder ausströmseitige Umlenkflächen zu gewinnen.

Besonders vorteilhaft ist es dabei, wenn die Außenseiten der einströmseitigen Umlenkflächen im weniger gekrümmten Teil die Prallflächen zwischen benachbarten Einströmöffnungen bilden. Weiterhin kann vorgesehen sein, daß die Außenseiten der Umlenkflächen im stärker gekrümmten Teil die quer zum einströmenden Luftstrom angeordnete Prallfläche beziehungsweise die den Verwirbelungsraum begrenzende Abschlußwand bilden. Auf diese Weise tragen die Baueinheiten nicht nur die Umlenkflächen, sondern auch die Prallflächen und Abschlußwände.

Am einfachsten läßt sich ein solcher Abscheider herstellen, wenn die Baueinheiten aus zwei Umlenkflächen einstückige Längsprofile sind.

Besonders vorteilhaft ist dabei eine Ausführungsform, die dadurch gekennzeichnet ist, daß das Längsprofil einen X-förmigen Querschnitt hat mit die Umlenkflächen ausbildenden Armen. Diese Arme sind auf einer Seite des Längsprofils vorzugsweise kürzer als die Arme auf der anderen Seite.

Bei einem bevorzugten Ausführungsbeispiel kann im Steg dieser Baueinheit mindestens eine kanalförmige Öffnung angeordnet sein, in die an den Endflächen jeder Baueinheit ein Haltevorsprung eines seitlichen Rahmenteils eingreift. Dieser seitliche Rahmenteil kann beispielsweise eine Platte sein, aus der mehrere Zungen ausgestanzt sind, die nach innen in die kanalförmige Öffnung der anliegenden Profile eingedrückt werden. Auf diese Weise gelingt es, zwischen den seitlichen Rahmenteilen eine größere Anzahl von Profilstegen dauerhaft und in genau definierter relativer Anordnung festzulegen.

Die Umlenkflächen sind im Abscheider vorzugsweise so angeordnet, daß die durch die Kanten einer Umlenkfläche gebildeten Ebenen gegenüber der Einströmrichtung einen Winkel zwischen 20° und 60° aufweisen. Im Gegensatz zu herkömmlichen Abscheidern, bei denen diese Ebenen immer senkrecht zur Einströmrichtung liegen, ergibt sich somit eine V-förmige Durchströmung eines solchen Abscheiders mit einer entsprechenden Platzeinsparung in der quer zur Durchströmungsrichtung verlaufenden Ebene.

Die Umlenkflächenrichtung weicht an den gegenüberliegenden Enden der Umlenkfläche vorzugsweise um einen Winkel zwischen 120° und 180° voneinander ab, das heißt die Umlenkflächen lenken den an ihnen entlanggeführten Gasstrom um Winkel in der genannten Größenordnung ab.

Die nachfolgende Beschreibung einer bevorzugten Ausführungsform der Erfindung dient im Zusammenhang mit der Zeichnung der näheren Erläuterung. Es zeigen:
- Figur 1: : eine Querschnittsansicht eines Teilbereiches eines Abscheiders mit nebeneinanderliegenden Wirbelkammern;
- Figur 2: : ein Strangprofil in Querschnittsansicht und
- Figur 3: : eine schematische Ansicht eines Abscheiders mit zwischen seitlichen Rahmenteilen gehaltenen, Umlenkflächen aufweisenden Strangprofilen.

Der in der Zeichnung dargestellte Abscheider dient der Abscheidung von Flüssigkeitströpfchen aus einem Gasstrom. Im folgenden wird der Gasstrom teilweise auch als Luftstrom bezeichnet, es versteht sich aber von selbst, daß dieser Abscheider zur Abscheidung von beliebigen Flüssigkeiten aus beliebigen Gasen verwendet werden kann.

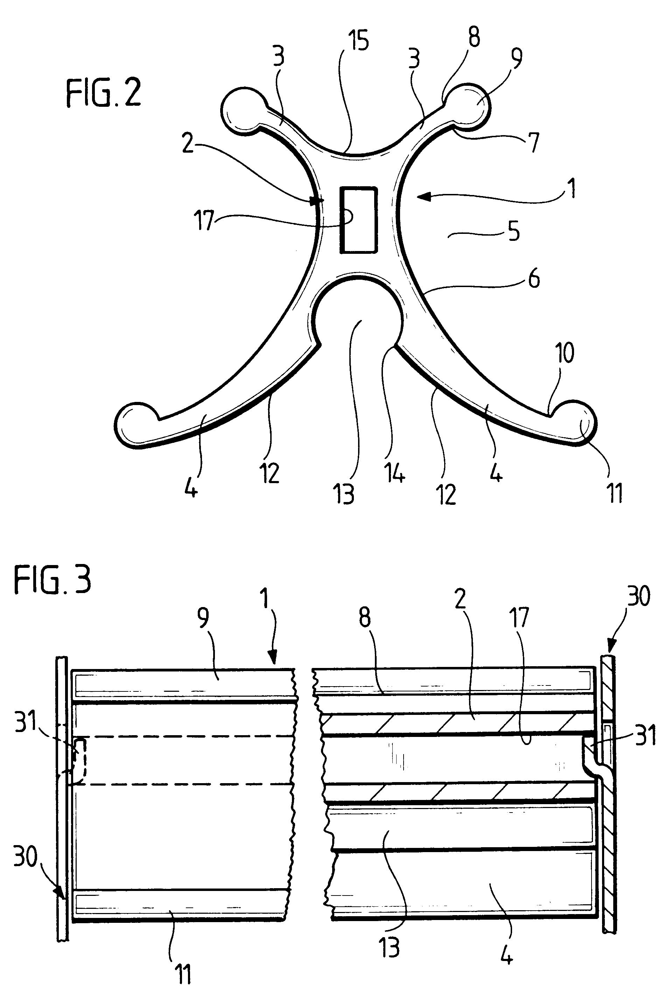

Der Abscheider ist im wesentlichen aufgebaut aus einer Vielzahl in bestimmter Weise nebeneinander angeordneter Strangprofile 1, die im dargestellten Ausführungsbeispiel alle gleich ausgebildet sind. Im folgenden wird daher anhand der Figur 2 ein einziges Strangprofil detailliert beschrieben. Dieses Strangprofil kann beispielsweise ein gezogenes Aluminiumprofil sein.

Ein im wesentlichen quaderförmiger, im folgenden als Steg 2 bezeichneter zentraler Teil trägt an seinen Ecken jeweils einen etwa unter 45° gegenüber der Mittelebene geneigten Arm 3, 4, wobei die beiden Arme 3, 4 an einer Seite der Mittelebene in ihrer Länge geringfügig aufeinander zu gebogen sind. Das Strangprofil ist zu der Mittelebene spiegelsymmetrisch ausgebildet, insgesamt ergibt sich somit ein etwa X-förmiger Querschnitt für das Strangprofil, wobei die Arme 3 auf einer Seite kürzer sind als die Arme 4 auf der anderen Seite.

Die einander zugewandten Seitenflächen der Arme 3 und 4 und die von ihnen eingeschlossene Seitenfläche des Steges 2 bilden gemeinsam eine Schale 5 mit einer Innenfläche 6 aus, deren Krümmung von dem längeren Arm 4 zum kürzeren Arm 3 zunimmt. Im Endbereich des kürzeren Armes 3 kann die Innenfläche 6 im Querschnitt kreisbogenförmig sein, es kann aber auch über die gesamte Länge der Innenfläche 6 eine kontinuierliche Zunahme der Krümmung vorgesehen sein.

Der kürzere Arm 3 trägt an seinem freien Ende eine wulstförmige Verdickung 9 mit kreisbogenförmigem Querschnitt, die im wesentlichen symmetrisch zum Arm 3 angeordnet ist, so daß sich zwischen dieser Verdickung 9 und beiden Seiten des Armes 3 jeweils eine Kante 7, 8 ausbildet.

In gleicher Weise trägt der längere Arm 4 an seinem Ende eine Verdickung 11 mit kreisförmigem Querschnitt, die jedoch in diesem Falle seitlich so versetzt ist, daß eine Kante 10 nur zwischen der Innenfläche 6 und der Verdickung 11 ausgebildet wird, nicht jedoch auf der gegenüberliegenden Fläche 12 des Armes 4.

Diese gegenüberliegende Fläche 12 des Armes 4, die in Figur 2 also an der Unterseite des Strangprofiles angeordnet ist, führt mit leichter konvexer Biegung zu einer im Querschnitt kreisbogenförmig begrenzten Erweiterung 13 an der Unterseite des Steges 2, wobei die Fläche 12 etwa rechtwinklig in die Erweiterung 13 einmündet. An dieser Stelle wird also eine etwa rechtwinklige Kante 14 ausgebildet. Die Erweiterung 13 ist über einen Winkelbereich von etwa 270° geschlossen, im Bereich zwischen der Einmündung der beiden Flächen 12 ist somit ein Bereich von etwa 90° der Erweiterung 13 offen.

Auf der gegenüberliegenden Seite des Strangprofiles 1 bilden die kürzeren Arme 3 zusammen mit der Oberseite des Steges 2 eine zur Mittelebene symmetrische Schale 15 aus, die im Bereich des Steges 2 im Querschnitt etwa kreisbogenförmig verläuft.

Im Steg 2 befindet sich ein durchgehender Kanal 17, der im dargestellten Ausführungsbeispiel einen rechteckigen Querschnitt aufweist. Dadurch wird einerseits Material gespart, zum anderen dient dieser Steg in der anhand der Figur 3 erläuterten Weise zur Festlegung dieser Strangprofile 1 in einem Abscheider.

Durch die Länge der Arme 3 und 4 bedingt verläuft eine Ebene, die durch die verdickten Endkanten der Schale 5 aufgespannt wird, gegenüber der Mittelebene unter einem Winkel von beispielsweise 25°, wobei dieser Winkel variiert werden kann.

An dieser Stelle wird darauf hingewiesen, daß die Zeichnung nicht maßstäblich ausgeführt ist, sondern lediglich der Orientierung der wesentlichen Konstruktionsmerkmale des Abscheiders dient.

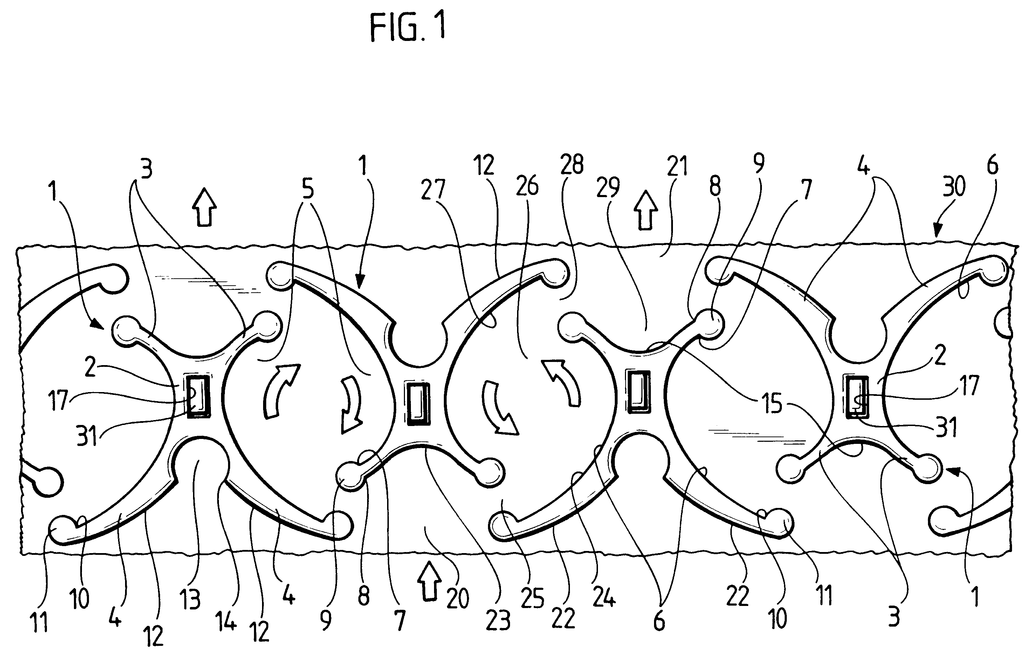

Wie aus Figur 1 ersichtlich, wird der Abscheider im wesentlichen ausschließlich aus Strangprofilen 1 der beschriebenen Art aufgebaut, wobei diese Strangprofile in zwei Gruppen angeordnet werden. Eine erste Gruppe umfaßt eine Anzahl von Strangprofilen 1, die in gleicher Orientierung im Abstand nebeneinander angeordnet sind. Diese gleich orientierten Strangprofile 1 bilden zwischen den einander gegenüberliegenden Enden der längeren Arme 4 eine Einströmöffnung 20 aus, die zu beiden Seiten durch die Verdickungen 11 begrenzt wird.

In der zweiten Gruppe werden die Strangprofile 1 um 180° gedreht nebeneinander angeordnet, wobei sie in ähnlicher Weise wie die Einströmöffnung 20 in der ersten Gruppe zwischen den Enden der längeren Arme 4 eine Ausströmöffnung 21 bilden, die ebenfalls durch die Verdickungen 11 begrenzt wird. Die Breite der Einströmöffnung 20 und der Ausströmöffnung 21 entspricht etwa der Breite des Steges 2 des Strangprofiles 1.

Diese beiden Gruppen von Strangprofilen werden so relativ zueinander angeordnet, daß die Mittelebene des Strangprofiles einer Gruppe mit der Einströmöffnung beziehungsweise der Ausströmöffnung der jeweils anderen Gruppe zentriert angeordnet ist. In Einströmrichtung sind die beiden Gruppen so angeordnet, daß die Kanäle 17 in den Stegen 2 bei den Strangprofilen 1 beider Gruppen etwa auf einer Linie liegen.

Durch diese relative Anordnung der Strangprofile 1 ergibt sich für den zu reinigenden Luftstrom der nachfolgend ausführlich beschriebene Strömungsweg:

Der Luftstrom strömt in Richtung der Mittelebene der Strangprofile 1 gegen den Abscheider, der aus einer Vielzahl im wesentlichen in einer Ebene nebeneinander angeordneter Strangprofile 1 besteht und somit insgesamt eine im wesentlichen plattenförmige Anordnung bildet, die senkrecht zur Plattenfläche angeströmt wird.

Dieser Luftstrom gelangt im Bereich zwischen zwei benachbarten Einströmöffnungen 20 gegen die Flächen 12 der längeren Arme 4, die somit eine Prallfläche 22 bilden. Diese Prallflächen konvergieren in Richtung auf die Erweiterung 13, so daß der gegen die Prallflächen 22 gerichtete Luftstrom in die Erweiterung 13 gerichtet wird. Dabei passiert er die Kante 14, die eine Abrißkante für die Strömung bildet, und wird in der Erweiterung 13 verwirbelt. Dies führt zu einer Abscheidung zumindest der groben Flüssigkeitspartikel im Luftstrom, im übrigen wird der Luftstrom in diesem Bereich zurückgeworfen, ein Durchtritt durch den Abscheider ist in diesem Bereich nicht möglich.

Durch die Einströmöffnung 20 hingegen kann ein Luftstrom zunächst in Richtung der Mittelebene der Strangprofile, das heißt in Einströmrichtung, hindurchtreten. Dieser Luftstrom gelangt in die Schale 15 des der Einströmöffnung 20 gegenüberliegenden Strangprofiles 1 der zweiten Gruppe, wobei die Schale 15 eine weitere Prallfläche 23 ausbildet. An dieser Prallfläche 23 wird der Luftstrom aufgeteilt und um mindestens 90° nach links und nach rechts umgelenkt. Dies führt zu einer Grobabscheidung mitgeführter Flüssigkeitsteilchen.

Nach der Umlenkung durch die Prallfläche 23 wird der Luftstrom durch diese Prallfläche 23 einerseits und durch die gegenüberliegende, eine einströmseitige Umlenkfläche 24 bildende Innenfläche 6 des benachbarten Strangprofiles zu einem zwischen dieser einströmseitigen Umlenkfläche 24 einerseits und der Verdickung 9 am Ende der Schale 15 des benachbarten Strangprofiles andererseits gebildeten Einlaßspalt 25 gelenkt, wobei stromaufwärts des Einlaßspaltes 25 die einströmseitige Umlenkfläche 24 und die Prallfläche 23 konvergieren. Die Breite des Einlaßspaltes 25 ist etwa halb so groß wie die Breite der Einströmöffnung 20, so daß der Luftstrom mit etwa gleicher Geschwindigkeit die Einströmöffnung und den Einlaßspalt 25 passiert, während in dem dazwischenliegenden, erweiterten Wirbelraum eine Herabsetzung der Strömungsgeschwindigkeit eintritt.

Durch den Einlaßspalt 25 hindurch lenkt die einströmseitige Umlenkfläche 24 den Luftstrom in eine Wirbelkammer 26, die einerseits durch den zunehmend gekrümmten Bereich der einströmseitigen Umlenkfläche 24 und andererseits durch den entsprechenden Bereich einer ausströmseitigen Umlenkfläche 27 begrenzt wird, die durch die Innenfläche 6 der Schale 5 des benachbarten Strangprofiles 1 der zweiten Gruppe gebildet wird. Diese Wirbelkammer 26 wird somit durch die einströmseitige Umlenkfläche 24 des einen Strangprofiles und die ausströmseitige Umlenkfläche 27 des anderen Strangprofiles so begrenzt, daß eine im wesentlichen kreisförmige Querschnittsfläche entsteht, wobei die Wirbelkammer 26 im Bereich des Einlaßspaltes 25 und im Bereich eines entsprechenden Auslaßspaltes 28 offen ist, der zwischen der ausströmseitigen Umlenkfläche 27 einerseits und der Verdickung 9 an der einströmseitigen Umlenkfläche 24 des anderen Strangprofiles andererseits entsteht.

Die einströmseitige Umlenkfläche 24 zwingt den in die Wirbelkammer 26 eintretenden Luftstrom auf eine immer stärker gekrümmte Bahn und erzeugt in der Wirbelkammer 26 eine starke Verwirbelung der hindurchtretenden Luft, so daß in diesem Bereich eine äußerst effektive Abscheidung mitgeführter Flüssigkeitspartikel erfolgt. Diese Abscheidung wird insbesondere durch die Kanten 7 zwischen den beiden Umlenkflächen 24 und 27 einerseits und den Verdickungen 9 andererseits gefördert.

Nach der Verwirbelung in der Wirbelkammer 26 verläßt der Luftstrom diese durch den Außlaßspalt 28, dessen Breite der des Einlaßspaltes 25 gleich ist, und wird längs der ausströmseitigen Umlenkfläche 27, deren Krümmung in Ausströmrichtung abnimmt, in einen Verwirbelungsraum 29 geleitet, der einerseits durch den Endbereich der ausströmseitigen Umlenkflächen 27 benachbarter Strangprofile 1 der zweiten Gruppe begrenzt wird und andererseits durch die Schale 15 eines Strangprofiles 1 der ersten Gruppe. In diesen Verwirbelungsraum 29 treten von gegenüberliegenden Seiten her zwei Luftströme ein, die im Verwirbelungsraum 29 frontal aufeinanderstoßen und sich dadurch besonders intensiv durchmischen. Im Verwirbelungsraum 29 erfolgt daher eine außerordentlich gründliche Feinabscheidung noch in dem Luftstrom verbliebener Flüssigkeitsteilchen, wobei dieser Effekt durch die Umlenkung der Luftströme noch erhöht wird. Die Luftströme werden nämlich in Richtung auf die Ausströmöffnung 21 um etwa 90° nach außen umgelenkt und verlassen dann den Abscheider durch die Ausströmöffnung 21 parallel zur Einströmrichtung, jedoch seitlich versetzt zu dieser.

Die Breite der Ausströmöffnung entspricht dabei der Breite der Einströmöffnung.

Bei der beschriebenen Anordnung sind zwischen benachbarten Strangprofilen der ersten und der zweiten Gruppe ausgebildete Wirbelkammern 26 im wesentlichen in einer Ebene nebeneinander angeordnet, wobei die Wirbelkammern 26 nur durch die Stege 2 der Strangprofile 1 voneinander getrennt werden. Dadurch ergibt sich eine sehr kompakte Anordnung des Abscheiders, da auf geringstem Volumen aktive Abscheidezonen angeordnet sind. Die Kompaktheit wird auch dadurch gefördert, daß die die Wirbelkammer 26 bildenden, einander gegenüberstehenden Schalen 5 nicht parallel zur flächenhaften Ausdehnung des Abscheiders angeordnet sind, sondern schräg dazu, wie sich daraus ergibt, daß die durch die Endkanten der Schalen 5 gebildeten Ebenen gegenüber der Mittelebene eines Strangprofiles 1, also gegenüber der Durchströmungsrichtung, einen Winkel von beispielsweise 25° bis 60° einschließen. Man erhält dadurch eine im wesentlichen V-förmige Durchströmung des Abscheideelementes.

In der Wirbelkammer 26, die den zentralen Abscheidungsbereich bildet, wird der Luftstrom durch die Erweiterung des Strömungsquerschnitts stark verlangsamt. Beispielsweise kann der Durchmesser der Wirbelkammer 26 vier- bis sechsmal so groß sein wie die Breite des Einlaßspaltes beziehungsweise des Auslaßspaltes. Dies führt zu starken Geschwindigkeitsänderungen im Luftstrom und damit zu einer sehr gründlichen Abscheidung.

Die Strangprofile jeder Gruppe werden gemeinsam in einem Rahmen oder Gestell gehalten. Beispielsweise können alle Strangprofile 1 einer Gruppe stirnseitig an eine Befestigungsplatte 30 angelegt sein (Figur 3), in der nach innen einbiegbare Lappen 31 ausgestanzt sind. Diese Lappen 31 greifen in die Kanäle 17 in den Stegen der Strangprofile ein und fixieren diese so zwischen Befestigungsplatten an beiden Stirnseiten der Strangprofile.

Jede in dieser Weise vormontierte Gruppe von Strangprofilen kann dann mit der jeweils anderen Gruppe zum Abscheider vereinigt werden. Dazu werden lediglich die beiden Gruppen um jeweils 180° verdreht und seitlich versetzt aufeinander zu geführt, so daß jeweils die Strangprofile einer Gruppe zwischen die Strangprofile der anderen Gruppe eingeschoben werden können, wie dies aus der Darstellung der Figur 1 deutlich wird. Die Abstände der beiden Gruppen zueinander können je nach Bedarf justiert werden, zur Reinigung kann der Abscheider in einfachster Weise dadurch zerlegt werden, daß die beiden Gruppen wieder voneinander entfernt werden.

## Patentansprüche

1. Quer angeströmter, plattenförmiger Abscheider für Flüssigkeiten aus einem Gasstrom, insbesondere für Ölnebel, mit einer Mehrzahl von jeweils zwei gekrümmten, einander mit der konkaven Seite seitlich versetzt gegenüberliegenden Umlenkflächen (24, 27), an denen ein zu reinigender Luftstrom nacheinander entlangströmt, wobei die Umlenkflächen eine Wirbelkammer (26) mit einem Einlaßspalt (25) und einem Auslaßspalt (28) zwischen sich einschließen
dadurch gekennzeichnet, daß die einströmseitige Umlenkfläche in Strömungsrichtung eine zunehmende Krümmung und die ausströmseitige Umlenkfläche (27) in Strömungsrichtung eine abnehmende Krümmung aufweist und daß die die Wirbelkammer (26) bildenden einströmseitigen und ausströmseitigen Umlenkflächen (24 beziehungsweise 27) in der durch ihre jeweiligen Kanten (7, 10) aufgespannten Ebene um maximal die halbe Breite einer Umlenkfläche (24, 27) gegeneinander versetzt sind.

2. Abscheider nach Anspruch 1 dadurch gekennzeichnet, daß die Krümmung des stromabwärts gelegenen Teils der einströmseitigen Umlenkfläche (24) kreisbogenförmig ist.

3. Abscheider nach einem der Ansprüche 1 oder 2, dadurch gekennzeichnet, daß die Krümmung des stromaufwärts gelegenen Teiles der ausströmseitigen Umlenkfläche (27) kreisbogenförmig ist.

4. Abscheider nach einem der voranstehenden Ansprüche, dadurch gekennzeichnet, daß die von den Umlenkflächen (24, 27) eingeschlossene Wirbelkammer (26) im wesentlichen einen kreisförmigen Querschnitt aufweist.

5. Abscheider nach Anspruch 4, dadurch gekennzeichnet, daß der Durchmesser der Wirbelkammer (26) vier- bis sechsmal so groß ist wie die Breite des Einlaßspaltes (25) zwischen der einströmseitigen Umlenkfläche (24) und der Kante (9) der ausströmseitigen Umlenkfläche (27).

6. Abscheider nach einem der voranstehenden Ansprüche, dadurch gekennzeichnet, daß die einströmseitige Umlenkfläche (24) mit ihrer einströmseitigen Kante (11) eine Einströmöffnung (20) begrenzt, durch die der zu reinigende Luftstrom von der Außenseite der Umlenkfläche (24) her im wesentlichen senkrecht zum anliegenden Teil der einströmseitigen Umlenkfläche (24) eintritt.

7. Abscheider nach Anspruch 6, dadurch gekennzeichnet, daß spiegelbildlich ausgebildete Paare von einströmseitigen und ausströmseitigen Umlenkflächen (24 beziehungsweise 27) nebeneinander und spiegelsymmetrisch zur Mittelachse des durch die Einströmöffnung (20) eintretenden Luftstromes angeordnet sind.

8. Abscheider nach Anspruch 7, dadurch gekennzeichnet, daß die Breite der Einströmöffnung (20) im wesentlichen doppelt so groß ist wie die Breite des Einlaßspaltes (25) in die Wirbelkammer (26).

9. Abscheider nach Anspruch 7 oder 8, dadurch gekennzeichnet, daß zwischen den einströmseitigen Kanten (9) der ausströmseitigen Umlenkflächen (27) quer zur Einströmrichtung des durch die Einströmöffnung (20) eintretenden Luftstromes eine konkave Prallfläche (23) angeordnet ist.

10. Abscheider nach Anspruch 9, dadurch gekennzeichnet, daß die Prallfläche (23) breiter ist als die Einströmöffnung (20).

11. Abscheider nach einem der Ansprüche 6 bis 10, dadurch gekennzeichnet, daß zwischen benachbarten Einströmöffnungen (20) in Einströmrichtung konvergierende Prallflächen (22) angeordnet sind.

12. Abscheider nach Anspruch 11, dadurch gekennzeichnet, daß die Prallflächen (22) unter Ausbildung einer Abrißkante (14) in eine erweiterte Prallkammer (13) einmünden.

13. Abscheider nach einem der voranstehenden Ansprüche, dadurch gekennzeichnet, daß die ausströmseitige Kante (11) der ausströmseitigen Umlenkfläche (27) eine Ausströmöffnung (21) begrenzt, durch die der gereinigte Luftstrom im wesentlichen senkrecht zum anliegenden Teil der ausströmseitigen Umlenkfläche (27) nach außen austritt.

14. Abscheider nach Anspruch 13, dadurch gekennzeichnet, daß der Ausströmöffnung (21) ein Verwirbelungsraum (29) vorgelagert ist, der von den ausströmseitigen Enden von zwei spiegelbildlich zueinander angeordneten ausströmseitigen Umlenkflächen (27), die die Ausströmöffnung (21) zwischen sich ausbilden, und von einer zwischen den ausströmseitigen Kanten (9) der beiden zugehörigen einströmseitigen Umlenkflächen (24) angeordneten Abschlußwand gebildet wird.

15. Abscheider nach Anspruch 14, dadurch gekennzeichnet, daß die Abschlußwand zum Verwirbelungsraum (29) hin konkav ausgebildet ist.

16. Abscheider nach Anspruch 14 oder 15, dadurch gekennzeichnet, daß die Abschlußwand breiter ist als die Ausströmöffnung (21).

17. Abscheider nach einem der Ansprüche 14, 15 oder 16, dadurch gekennzeichnet, daß die ausströmseitige Umlenkfläche (27) und die einströmseitige Umlenkfläche (24) am Auslaß der Wirbelkammer (26) einen Auslaßspalt (28) bilden und daß jeder Auslaßspalt (28) so in den Verwirbelungsraum (29) einmündet, daß der aus ihm austretende Luftstrom frontal auf einen Luftstrom auftrifft, der durch einen gegenüberliegenden Auslaßspalt (28) einer benachbarten Wirbelkammer (28) in den Verwirbelungsraum (29) eintritt.

18. Abscheider nach einem der voranstehenden Ansprüche, dadurch gekennzeichnet, daß an den einströmseitigen und ausströmseitigen Enden der Umlenkflächen (24, 27) wulstförmige Abrißkanten (9, 11) angeordnet sind.

19. Abscheider nach Anspruch 18, dadurch gekennzeichnet, daß die wulstförmigen Abrißkanten (9) an der einströmseitigen Kante der ausströmseitigen Umlenkfläche (27) sowie an der ausströmseitigen Kante der einströmseitigen Umlenkfläche (24) mittig angeordnet sind.

20. Abscheider nach Anspruch 18 oder 19, dadurch gekennzeichnet, daß die der Einströmöffnung (20) und der Ausströmöffnung (21) benachbarten Abrißkanten (10, 11) nur an der Innenseite der Umlenkflächen (24, 27) ausgebildet sind.

21. Abscheider nach einem der voranstehenden Ansprüche, dadurch gekennzeichnet, daß zwei benachbarte, spiegelbildlich ausgebildete einströmseitige Umlenkflächen (24) durch einen Steg (2) an ihrer Außenseite miteinander verbunden sind.

22. Abscheider nach einem der voranstehenden Ansprüche, dadurch gekennzeichnet, daß zwei benachbarte, spiegelbildlich ausgebildete ausströmseitige Umlenkflächen (27) durch einen Steg (2) an ihrer Außenseite miteinander verbunden sind.

23. Abscheider nach den Ansprüche 21 und 22, dadurch gekennzeichnet, daß die Baueinheiten aus je zwei Umlenkflächen (24 beziehungsweise 27) gleich ausgebildet sind und um 180° verdreht und seitlich und in Einströmrichtung versetzt zueinander angeordnet sind.

24. Abscheider nach Anspruch 23, dadurch gekennzeichnet, daß die Außenseiten der einströmseitigen Umlenkflächen (24) im weniger gekrümmten Teil die Prallflächen (22) zwischen benachbarten Einströmöffnungen (20) bilden.

25. Abscheider nach einem der Ansprüche 23 oder 24, dadurch gekennzeichnet, daß die Außenseiten der Umlenkflächen (24 beziehungsweise 27) im stärker gekrümmten Teil die quer zum einströmenden Luftstrom angeordnete Prallfläche (23) beziehungsweise die den Verwirbelungsraum (29) begrenzende Abschlußwand bilden.

26. Abscheider nach einem der Ansprüche 23 bis 25, dadurch gekennzeichnet, daß die Baueinheiten aus zwei Umlenkflächen (24, 27) einstückige Längsprofile sind.

27. Abscheider nach Anspruch 26, dadurch gekennzeichnet, daß das Längsprofil einen X-förmigen Querschnitt hat mit die Umlenkflächen (24, 27) ausbildenden Armen (3, 4)

28. Abscheider nach Anspruch 27, dadurch gekennzeichnet, daß die Arme (3) auf einer Seite des Längsprofils kürzer sind als die Arme (4) auf der anderen Seite.

29. Abscheider nach einem der Ansprüche 23 bis 28, dadurch gekennzeichnet, daß im Steg (2) mindestens eine kanalförmige Öffnung (17) angeordnet ist, in die an den Endflächen jeder Baueinheit ein Haltevorsprung (31) eines seitlichen Rahmenteils (30) eingreift.

30. Abscheider nach einem der voranstehenden Ansprüche, dadurch gekennzeichnet, daß die durch die Kanten einer Umlenkfläche (24 beziehungsweise 27) gebildeten Ebenen gegenüber der Einströmrichtung einen Winkel zwischen 20° und 60° aufweisen.

31. Abscheider nach Anspruch 30, dadurch gekennzeichnet, daß er durch die geneigte Anordnung der die Wirbelkammer (26) bildenden Umlenkflächen (24, 27) V-förmig durchströmt ist.

32. Abscheider nach einem der voranstehenden Ansprüche, dadurch gekennzeichnet, daß die Umlenkflächenrichtung an den gegenüberliegenden Enden der Umlenkflächen (24 beziehungsweise 27) um einen Winkel zwischen 120° und 180° voneinander abweicht.

## Claims

1. A transverse-incident-flow plate-shaped separator for liquids from a gas stream, in particular for oil mists, having a plurality of deflecting faces (24, 27), each being a pair which are curved and situated opposite one another with the concave side offset laterally and along which an air stream to be cleaned flows in succession, wherein the deflecting faces enclose between themselves a swirl chamber (26) with an inlet gap (25) and an outlet gap (28), **characterized in that** the inflow-side deflecting face has an increasing curvature in the direction of flow and the outflow-side deflecting face (27) has a decreasing curvature in the direction of flow, and the inflow-side and outflow-side deflecting faces (24 and 27) respectively which form the swirl chamber (26) are mutually offset in the plane produced by their respective edges (7, 10) by a maximum of half the width of one deflecting face (24, 27).

2. A separator according to Claim 1, **characterized in that** the curvature of the downstream part of the inflow-side deflecting face (24) is circular.

3. A separator according to one of Claims 1 [and] 2, **characterized in that** the curvature of the upstream part of the outflow-side deflecting face (27) is circular.

4. A separator according to one of the preceding Claims, **characterized in that** the swirl chamber (26) enclosed by the deflecting faces (24, 27) has a substantially circular cross-section.

5. A separator according to Claim 4, **characterized in that** the diameter of the swirl chamber (26) is from four to six times as large as the width of the inlet gap (25) between the inflow-side deflecting face (24) and the edge (9) of the outflow-side deflecting face (27).

6. A separator according to one of the preceding Claims, **characterized in that** the inflow-side deflecting face (24) bounds with its inflow-side edge (11) an inflow opening (20) through which the air stream to be cleaned enters from the outside of the deflecting face (24) substantially at right angles to the adjacent part of the inflow-side deflecting face (24).

7. A separator according to Claim 6, **characterized in that** pairs of inflow-side and outflow-side deflecting faces (24 and 27) respectively, constructed in a mirror-inverted manner, are arranged adjacent to one another and axially symmetrically to the median axis of the air stream entering through the inflow opening (20).

8. A separator according to Claim 7, **characterized in that** the width of the inflow opening (20) is substantially twice as large as the width of the inlet gap (25) into the swirl chamber (26).

9. A separator according to Claim 7 or 8, **characterized in that** a concave impact face (23) is arranged between the inflow-side edges (9) of the outflow-side deflecting faces (27) and transversely to the inflow direction of the air stream entering through the inflow opening (20).

10. A separator according to Claim 9, **characterized in that** the impact face (23) is wider than the inflow opening (20).

11. A separator according to one of Claims 6 to 10, **characterized in that** impact faces (22) converging in the inflow direction are arranged between adjacent inflow openings (20).

12. A separator according to Claim 11, **characterized in that** the impact faces (22) open into an enlarged impact chamber (13) while forming a breakaway edge (14).

13. A separator according to one of the preceding Claims, **characterized in that** the outflow-side edge (11) of the outflow-side deflecting face (27) bounds an outflow opening (21) through which the cleaned air stream passes to the outside substantially at right angles to the adjacent part of the outflow-side deflecting face (27).

14. A separator according to Claim 13, **characterized in that** a swirling space (29) is arranged upstream of the outflow opening (21), the swirling space (29) being formed by the outflow-side ends of two outflow-side deflecting faces (27), which are arranged in a minor-inverted manner with respect to each other and which form the outflow opening (21) between themselves, and by an end wall arranged between the outflow-side edges (9) of the two associated inflow-side deflecting faces (24).

15. A separator according to Claim 14, **characterized in that** the end wall is made concave towards the swirling space (29).

16. A separator according to Claim 14 or 15, **characterized in that** the end wall is wider than the outflow opening (21).

17. A separator according to one of Claims 14, 15 [and] 16, **characterized in that** the outflow-side deflecting face (27) and the inflow-side deflecting face (24) form an outlet gap (28) at the outlet of the swirl chamber (26), and each outlet gap (28) opens into the swirling space (29) in such a way that the air stream emerging therefrom strikes frontally against an air stream entering the swirling space (29) through an outlet gap (28), situated opposite, of an adjacent swirl chamber (28) [*sic*].

18. A separator according to one of the preceding Claims, **characterized in that** toroidal breakaway edges (9, 11) are provided on the inflow-side and outflow-side ends of the deflecting faces (24, 27).

19. A separator according to Claim 18, **characterized in that** the toroidal breakaway edges (9) are arranged centrally on the inflow-side edge of the outflow-side deflecting face (27) as well as on the outflow-side edge of the inflow-side deflecting face (24).

20. A separator according to Claim 18 or 19, **characterized in that** the breakaway edges (10, 11) adjacent to the inflow opening (20) and the outflow opening (21) are formed only on the inside of the deflecting faces (24, 27).

21. A separator according to one of the preceding Claims, **characterized in that** two adjacent- inflow-side deflecting faces (24) formed in a mirror-inverted manner are connected together on the outside thereof by a web (2).

22. A separator according to one of the preceding Claims, **characterized in that** two adjacent outflow-side deflecting faces (27) formed in a mirror-inverted manner are connected together on the outside thereof by a web (2).

23. A separator according to Claims 21 and 22, **characterized in that** the structural units are each constructed similarly from two deflecting faces (24 and 27 respectively) and are staggered by 180° and are arranged mutually offset laterally and in the inflow direction.

24. A separator according to Claim 23, **characterized in that** the outsides of the outflow-side deflecting faces (24) in the less curved part form the impact faces (22) between adjacent inflow openings (20).

25. A separator according to one of Claims 23 [and] 24, **characterized in that** the outsides of the deflecting faces (24 and 27 respectively) in the part with a more pronounced curvature form the impact face (23) arranged transversely to the inflowing air stream or the end wall bounding the swirling space (29) respectively.

26. A separator according to one of Claims 23 to 25, **characterized in that** the structural units are longitudinal sections formed integrally from two deflecting faces (24, 27).

27. A separator according to Claim 26, **characterized in that** the longitudinal section has a cruciform cross-section with arms (3, 4) forming the deflecting faces (24, 27).

28. A separator according to Claim 27, **characterized in that** the arms (3) on one side of the longitudinal section are shorter than the arms (4) on the other side.

29. A separator according to one of Claims 23 to 28, **characterized in that** at least one duct-like opening (17) is provided in the web (2), a retaining device (31) of a lateral frame part (30) engaging in the said duct-like opening (17) on the end faces of each structural unit.

30. A separator according to one of the preceding Claims, **characterized in that** the planes formed by the edges of a deflecting face (24 and 27 respectively) are at an angle of between 20° and 60° with respect to the inflow direction.

31. A separator according to Claim 30, **characterized in that** it is traversed in a V-shaped manner as a result of the inclined arrangement of the deflecting faces (24, 27) forming the swirl chamber (26).

32. A separator according to one of the preceding Claims, **characterized in that** the directions of the deflecting faces (24 and 27 respectively) at the opposite ends thereof diverge from each other by an angle of between 120° and 180°.

## Revendications

1. Séparateur à courant transversal en forme de plaque pour séparer des liquides hors d'un flux gazeux, en particulier un brouillard d'huile, comportant une multitude de surfaces de déviation (24, 27) incurvées, agencées par deux l'une en face de l'autre, l'une étant décalée latéralement avec le côté concave par rapport à l'autre, le long desquelles s'écoule de manière consécutive un courant d'air à nettoyer, les surfaces de déviation enfermant entre elles une chambre de tourbillonnement (26) avec une fente d'entrée (25) et une fente de sortie (28), caractérisé en ce que la surface de déviation du côté admission présente une courbure croissante en direction d'écoulement, et la surface de déviation (27) du côté évacuation une courbure décroissante en direction d'écoulement, et en ce que les surfaces de déviation du côté admission et du côté évacuation (24 et 27, respectivement) formant la chambre de tourbillonnement (26) sont décalées l'une par rapport à l'autre au maximum de la demi-largeur d'une surface de déviation (24, 27), dans le plan formé par leurs bords (7, 10) respectifs.

2. Séparateur selon la revendication 1, caractérisé en ce que la courbure de la partie située en aval de la surface de déviation du côté admission (24) est réalisée en forme d'arc de cercle

3. Séparateur selon l'une ou l'autre des revendications 1 et 2, caractérisé en ce que la courbure de la partie située en amont de la surface de déviation du côté évacuation (27) est réalisée en forme d'arc de cercle.

4. Séparateur selon l'une des revendications précédentes, caractérisé en ce que la chambre de tourbillonnement (26) enfermée par les surfaces de déviation (24, 27) présente sensiblement une section circulaire.

5. Séparateur selon la revendication 4, caractérisé en ce que le diamètre de la chambre de tourbillonnement (26) est quatre à six fois plus grand que la largeur de la fente d'entrée (25) entre la surface de déviation du côté admission (24) et le bord (9) de la surface de déviation du côté évacuation (27).

6. Séparateur selon l'une des revendications précédentes, caractérisé en ce que la surface de déviation (24) du côté admission délimite avec son bord (11) du côté admission une ouverture d'admission (20) à travers laquelle le courant d'air à nettoyer pénètre de l'extérieur de la surface de déviation (24) sensiblement perpendiculairement à la partie adjacente de la surface de déviation (24) du côté admission.

7. Séparateur selon la revendication 6, caractérisé en ce que des paires de surfaces de déviation du côté admission et du côté évacuation (24, 27 respectivement) réalisées symétriques sont agencées l'une à côté de l'autre et symétriquement par rapport à l'axe médian du courant d'air entrant par l'ouverture d'admission (20).

8. Séparateur selon la revendication 7, caractérisé en ce que la largeur de l'ouverture d'admission (20) est sensiblement deux fois plus grande que la largeur de la fente d'entrée (25) dans la chambre de tourbillonnement (26).

9. Séparateur selon l'une ou l'autre des revendications 7 et 8, caractérisé en ce qu'une surface de rebondissement (23) concave est agencée entre les bords (9) du côté admission des surfaces de déviation (27) du côté évacuation, transversalement à la direction d'admission du courant d'air entrant par l'ouverture d'admission (20).

10. Séparateur selon la revendication 9, caractérisé en ce que la surface de rebondissement (23) est plus large que l'ouverture d'admission (20).

11. Séparateur selon l'une quelconque des revendications 6 à 10, caractérisé en ce que des surfaces de rebondissement (22) convergentes en direction d'admission sont agencées entre des ouvertures d'admission (20) voisines.

12. Séparateur selon la revendication 11, caractérisé en ce que les surfaces de rebondissement (22) débouchent dans une chambre de rebondissement (13) élargie en formant un bord d'arrachement (14).

13. Séparateur selon l'une quelconque des revendications précédentes, caractérisé en ce que le bord (11) du côté évacuation de la surface de déviation (27) du côté évacuation limite une ouverture d'évacuation (21) à travers laquelle le courant d'air nettoyé s'échappe vers l'extérieur de manière sensiblement perpendiculaire à la partie adjacente de la surface de déviation (27) du côté évacuation.

14. Séparateur selon la revendication 13, caractérisé en ce que l'ouverture d'évacuation (21) est précédée d'un espace de tourbillonnement (29) qui est formé par les extrémités du côté évacuation de deux surfaces de déviation (27) du côté évacuation agencées symétriquement l'une par rapport à l'autre, qui forment entre elles l'ouverture d'évacuation (21), et par une paroi de fermeture agencée entre les bords (9) du côté évacuation des deux surfaces correspondantes de déviation (24) du côté admission.

15. Séparateur selon la revendication 14, caractérisé en ce que la paroi de fermeture est réalisée de forme concave en direction de l'espace de tourbillonnement (29).

16. Séparateur selon l'une ou l'autre des revendications 14 et 15, caractérisé en ce que la paroi de fermeture est plus large que l'ouverture d'évacuation (21).

17. Séparateur selon l'une quelconque des revendications 14, 15 ou 16, caractérisé en ce que la surface de déviation (27) du côté évacuation et la surface de déviation (24) du côté admission forment à la sortie de la chambre de tourbillonnement (26) une fente de sortie (28), et en ce que chaque fente de sortie (28) débouche de telle manière dans l'espace de tourbillonnement (29) que le courant d'air qui en sort se heurte de front à un courant d'air qui entre dans l'espace de tourbillonnement (29) à travers une fente de sortie (28) opposée d'une chambre de tourbillonnement (26) voisine.

18. Séparateur selon l'une quelconque des revendications précédentes, caractérisé en ce que des bords (9, 11) d'arrachement en forme de bourrelets sont agencés sur les extrémités du côté admission et du côté évacuation des surfaces de déviation (24, 27).

19. Séparateur selon la revendication 18, caractérisé en ce que les bords (9) d'arrachement en forme de bourrelets sont agencées au milieu sur le bord du côté admission de la surface de déviation (27) du côté évacuation ainsi que sur le bord du côté évacuation de la surface de déviation (24) du côté admission.

20. Séparateur selon l'une ou l'autre des revendications 18 et 19, caractérisé en ce que les bords (10, 11) d'arrachement voisins de l'ouverture d'admission (20) et de l'ouverture d'évacuation (21) ne sont formés que sur la face intérieure des surfaces de déviation (24, 27).

21. Séparateur selon l'une quelconque des revendications précédentes, caractérisé en ce que deux surfaces de déviation (24) du côté admission, qui sont voisines et réalisées symétriquement l'une par rapport à l'autre, sont reliées l'une à l'autre par un voile (2) sur leur face extérieure.

22. Séparateur selon l'une quelconque des revendications précédentes, caractérisé en ce que deux surfaces de déviation (27) du côté évacuation, qui sont voisines et réalisées symétriquement l'une par rapport à l'autre, sont reliées l'une à l'autre par un voile (2) sur leur face extérieure.

23. Séparateur selon les revendications 21 et 22, caractérisé en ce que les éléments de construction sont formés chacun de manière identique par deux surfaces de déviation (24 et 27, respectivement) et tournés de 180° et agencés latéralement et en décalage les uns par rapport aux autres en direction du courant d'admission.

24. Séparateur selon la revendication 23, caractérisé en ce que les faces extérieures des surfaces de déviation (24) du côté admission forment, dans la partie moins recourbée, les surfaces de rebondissement (22) entre des ouvertures d'admission (20) voisines.

25. Séparateur selon l'une ou l'autre des revendications 23 et 24, caractérisé en ce que les faces extérieures des surfaces de déviation, (24 et 27, respectivement) dans la partie plus recourbée, forment la surface de rebondissement (23) agencée transversalement au courant d'air entrant ou la paroi de fermeture délimitant l'espace de tourbillonnement (29).

26. Séparateur selon l'une quelconque des revendications 23 à 25, caractérisé en ce que les éléments constitués de deux surfaces de déviation (24, 27) sont des profilés longitudinaux faits d'une seule pièce.

27. Séparateur selon la revendication 26, caractérisé en ce que le profilé longitudinal a une section en forme de X avec des bras (3, 4) formant les surfaces de déviation (24, 27).

28. Séparateur selon la revendication 27, caractérisé en ce que sur un côté du profilé longitudinal, les bras (3) sont plus courts que les bras (4) sur l'autre côté.

29. Séparateur selon l'une quelconque des revendications 23 à 28, caractérisé en ce qu'au moins une ouverture (17) en forme de canal est agencée dans le voile (2), ouverture dans laquelle sur les faces d'extrémité de chaque élément vient s'engager une saillie de retenue (31) d'une partie de cadre (30) latérale.

30. Séparateur selon l'une quelconque des revendications précédentes, caractérisé en ce que les plans formés par les bords d'une surface de déviation (24 et 27, respectivement) forment par rapport à la direction d'admission un angle compris entre 20° et 60°.

31. Séparateur selon la revendication 30, caractérisé en ce que grâce à l'agencement incliné des surfaces de déviation (24, 27) formant la chambre de tourbillonnement (26), il est traversé en forme de V par l'écoulement.

32. Séparateur selon l'une quelconque des revendications précédentes, caractérisé en ce que la direction des surfaces de déviation diffère sur les extrémités opposées des surfaces de déviation (24 et 27, respectivement) d'un angle compris entre 120° et 180°.
